(19) **Europäisches Patentamt**

**European Patent Office**

**Office européen des brevets**

(11) Publication number: **0 263 578**

**A1**

(12) # EUROPEAN PATENT APPLICATION

(21) Application number: **87305891.1**

(22) Date of filing: **03.07.87**

(51) Int. Cl.⁴: **F16H 1/45**

(30) Priority: **05.09.86 US 904702**

(43) Date of publication of application:
**13.04.88 Bulletin 88/15**

(84) Designated Contracting States:
**BE DE FR GB IT**

(71) Applicant: **Clark Equipment Company**
**100 North Michigan Street P.O. Box 7008**
**South Bend Indiana 46634(US)**

(72) Inventor: **DeWald, Gregory T.**
**51732 Old Mill Road**
**South Bend Indiana 46637(US)**

(74) Representative: **Sheader, Brian N. et al**
**ERIC POTTER & CLARKSON 27 South Street**
**Reading Berkshire, RG1 4QU(GB)**

(54) **Limited slip differential.**

(57) A limited slip differential (10) for a ground vehicle having at least one friction clutch (60) located between the differential case (12) and a side gear (32), with dual mechanisms which cooperate for urging the clutch (60) into engagement and thus restricting the differential action. The first mechanism for urging the clutch (60) into engagement comprises an axial force exerted on the side gear (32) by a bevel gear (42) on the crossmember (36) of the differential which is in mesh with the side gear (32). The second mechanism (69) comprises a disc spring (56) housed in a retainer (48) which abuts the crossmember (36). The disc spring (56) exerts force between the crossmember (36) and the side gear (32) to augment the axial force of the bevel gear (42) in urging the friction clutch (60) into engagement.

Fig.1

EP 0 263 578 A1

## LIMITED SLIP DIFFERENTIAL

This invention relates to gear type differentials which are utilized in the drive axles of vehicles to allow the wheels at the opposite ends of such a drive axle to operate at different speeds when the vehicle is turning. More specifically, it relates to a limited slip or torque proportioning differential in which the differential action is restricted in order to assure that there is torque available to drive the wheels at both ends of the drive axle even though the wheel or wheels at one end may be on a surface which provides little or no traction.

It is well known in the art of differentials that the purpose of such mechanisms is to divide torque equally between two shafts of a drive axle and that if the wheel on one shaft is unable to absorb torque, no torque can be applied to the wheel on the other shaft. It is also known to preload or bias such a differential so that the torque absorption by either output shaft cannot fall below a predetermined amount. This bias can be produced in various ways, and among other ways it is known to use a multiple plate clutch which utilizes two cooperating means for applying the clutch to achieve desirable limited slip characteristics.

Many prior art limited slip differentials can be classified as either the spring additive type or the spring subtractive type. In both these types there is a friction clutch between at least one side gear and the adjacent case to restrict differential action. Such clutches may be of the multiple plate type or other equivalent type. The side gears of such a differential exert an axial force or thurst on a clutch because of the interaction of the meshed bevel teeth between the pinion gears and side gears, and this axial force tends to apply the clutch to restrict differential operation. In a spring additive differential a spring is arranged to augment the axial force exerted by the interaction or separation force of the bevel gears, while in a spring subtractive differential the spring opposes the axial force exerted by the bevel gears.

U.S. Patent 1,481,889 Carhart dated January 29, 1924 shows a limited slip differential having a pair of multiple plate clutches located respectively between the side gears and the differential case on opposite sides of the differential gearing. It has neither a spring additive feature nor a spring subtractive feature.

U.S. Patent 2,821,096 Lyeth, Jr. dated January 28, 1958 shows a spring additive type limited slip differential with cone clutches. In this patent conical annular rings or clutching elements are utilized, such elements being held in secure positions on the side gears. Mating conical seats are machined in the interior walls of the adjacent case. These cone clutches are applied by two forces. One is the axial force exerted on the side gears by the pinion gears during differential action. The other force is provided by a coil spring located internally of the crossmember of the differential and acting to urge both axle shafts away from the crossmember, thus augmenting the axial force in applying the cone clutches.

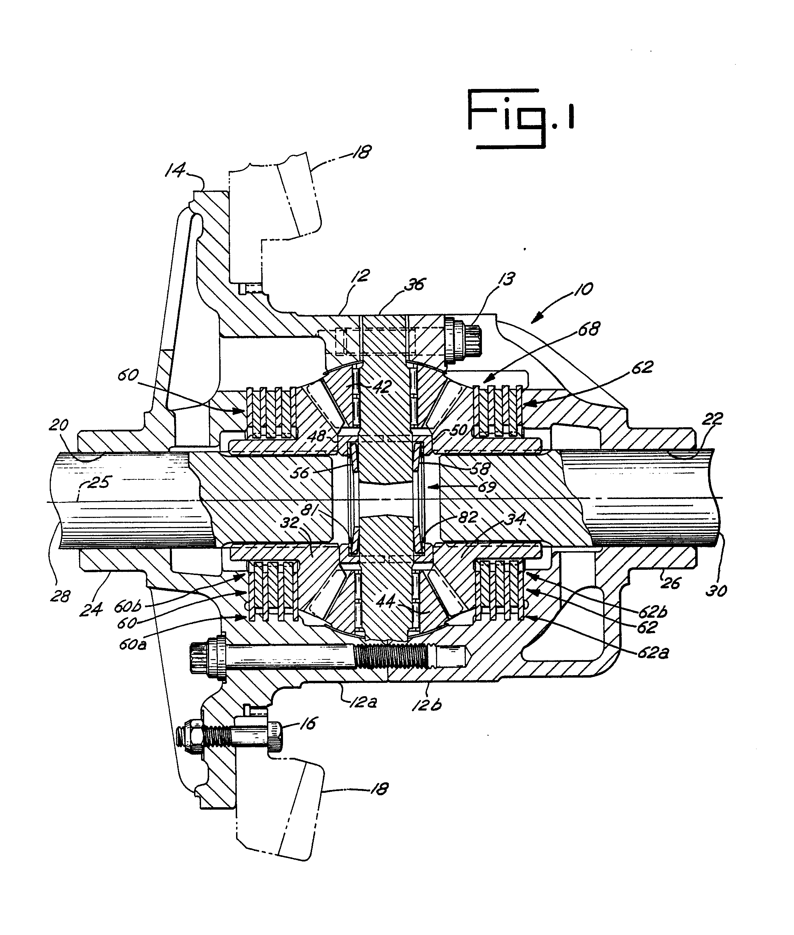

U.S. Patent 3,815,442 McAninch et al dated June 11, 1974 discloses seven different limited slip differentials. Those illustrated in Figs. 1, 2, 5 and 6 of the patent drawing are spring substractive, while those illustrated in Figs, 3, 7 and 8 are spring additive.

There is a discussion of a Limited Slip Differential in paper No. 710610 published by the Society of Automotive Engineers for the Mid-Year Meeting at Montreal, Quebec, Canada June 7-11, 1971.

The present invention provides a limited slip differential having a crossmember disposed within a rotatable case and connected for rotation with the case about an axis of rotation, a bevel pinion gear carried by the crossmember, an axle shaft rotatably carried by the case, a side gear disposed within the case having its teeth in mesh with the teeth of the pinion gear, the inner end of said axle shaft being connected to the side gear for rotation with the side gear about the axis of rotation, a friction clutch for transmitting torque between the case and the side gear, the clutch including a first annular friction portion connected to the case and a second annular friction portion connected to the side gear, whereby an axial force applied to the side gear by the pinion gear urges the two friction members into engagement and thus restricts the differential action of the differential characterised in that the limited slip differential comprises, means for exerting another and additive force on said friction clutch, said means including an annular spring retainer acting on said side gear, an annular flat spring located between said retainer and said crossmember for exerting a force axially outward on said side gear relative to said crossmember; said crossmember having at least one opening therein; said spring retainer including an annular rim which houses said spring; and said retainer having at least one projection extending into said opening which causes said retainer to rotate in unison with said crossmember.

Thus the differential of the present invention is a spring additive differential mechanism which has at least one friction clutch located between the differential case and a side gear, with means for urging the clutch into engagement and thus restricting the differential action of the differential. Also included are means for exerting another and additive force on the friction clutch, including an annular spring retainer directly or indirectly abutting the inner surface of the side gear. The crossmember of the differential has an opening in it which is parallel to the axis of the axle shaft. The spring retainer is annular and has at least one projection on it extending axially inwardly into the opening in the crossmember, which causes the spring retainer to rotate in unison with the crossmember. A flat spring is located between the crossmember and the side gear for exerting a force axially outward on the side gear relative to the crossmember.

The invention will be more particularly described with reference to the accompanying drawings, in which:-

Figure 1 of the drawing is a sectional view of a differential embodying the present invention taken along the axis of the two axle shafts and side gears;

Figure 2 shows the crossmember of the differential,

Figure 3 shows a sectional view along the line 3-3 of Fig. 4 of a spring retainer of the invention; and

Figure 4 shows an end view of the spring retainer.

Referring to Fig. 1 of the drawings, the preferred form of limited slip differential of the present invention is indicated generally by reference numeral 10 and includes a differential case 12 having an integrally formed radial flange 14 to which is secured by means of circumferentially spaced cap screws 16 a ring gear 18 (shown in dot-dash lines) which is driven by the engine drive shaft in conventional fashion through a pinion gear (not shown). The case 12 is shown as comprising complementary sections 12a and 12b secured to each other by circumferentially spaced cap screws 13, is hollow in construction and is provided with diametrically opposed openings 20 and 22 defined by hubs 24 and 26 respectively. Freely journaled in the hubs 24 and 26 for rotation about axis 25 are output shafts 28 and 30 respectively. Splined to the inner ends of the shafts 28 and 30 for limited axial movement with respect thereto are side gears 32 and 34 respectively.

A crossmember 36 extends through the hollow interior of the casing 12 and is held in place by cap screws 13 which also hold the two parts of the casing together. Rotatably mounted on the four arms of crossmember 36 are pinion gears 42 and 44, plus two others which are not visible on this drawing. Each of the pinion gears is in constant mesh with both of the side gears. Power is normally transmitted from the engine drive shaft to the output shafts 28 and 30 by rotating the case 12 and revolving the pinion gears and side gears in unison with the case about axis 25. When differential action is required relative movement occurs between the pinion gears and the side gears so that the pinion gears assume a new position with respect to the side gears and thus equal speed of the output shafts may be effected as before. Relative movement of the side gears with respect to the pinion gears is resisted under all conditions tending to effect differentiation. This resistance to differentiation is effected by dual means or mechanism which provides a constant force which is operative under all torque conditions and a second force which varies according to the torque input at the time differentiation occurs.

As illustrated herein the present invention includes two multiple plate clutches 60 and 62 of known type which are located respectively between the case 12 and side gears 32 and 34 on opposite sides of crossmember 36, although in some instances one clutch may be sufficient. Each clutch pack comprises a set of interleaved plates, with alternate ones of the plates splined to case 12 at the outer diameters 60a and 62a, and to side gears 32 and 34 respectively at the inner diameters 60b and 62b. As is well-known when axial force is applied to such multiple plate assemblies they act as clutches and tend to cause the case and the side gears to rotate in unison. While multiple plate assemblies are shown it is possible to utilize two single plates, one splined to the case and the other to the side gear, or another equivalent friction clutch. The axial force on the multiple plate clutches arising from the interaction of the pinion gears and the side gears applies pressure longitudinally to the multiple plate clutches and urges them toward clutch application, and this is one of the dual means of this invention for applying the clutches. This means is designated collectively by the numeral 68 and provides a variable axial force over the normal operating range of the differential, the highest axial force occurring when the torque on ring gear 18 is highest and the lowest axial force occurring when the torque on ring gear 18 is lowest.

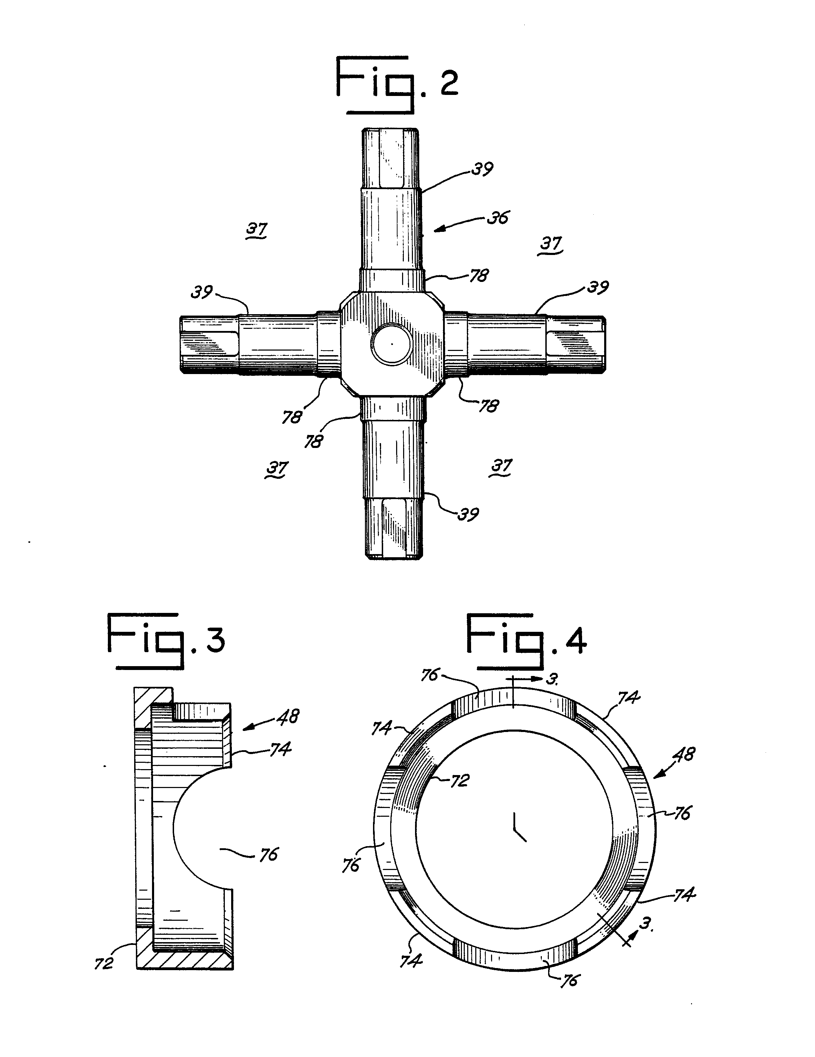

The other of the dual means, which is collectively designated 69, and which also acts to apply the clutches, comprises a pair of flat springs 56 and 58, one on each side of crossmember 36. These springs are of the type sometimes referred to as Belleville washers. Retainers 48 and 50, which retain springs 56 and 58 respectively, have the configuration illustrated in Figs 3 and 4. These figures show retainer 48 but retainer 50 is the same except reversed. Each retainer includes an annular rim portion 72 which has four integral projections 74 extending axially. These projections define four semicircular spaces 76 between the projections, and these spaces receive circular portions 78 of the crossmember 36 when the differential is assembled, causing retainers 48 and 50 to rotate in unison with crossmember 36. The projections 74 extend into axial openings 37 between the arms 39 of crossmember 36. The flat springs 56 and 58 are captured between the spring retainers and the crossmember during assembly, and spacers 81 and 82 may be located between the retainers and the flat springs. The retainer rings 48 and 50 rotate with crossmember 36.

Each of springs 56 and 58 exerts a constant outward axial force on the respective side gears 32 and 34, such forces being caused by the respective flat springs attempting to push retainer rings 48 and 50 away from their respective sides of crossmember 36. The force is transmitted from retainer rings 48 and 50 to side gears 32 and 34, and thereby exerts outward axial forces on the side gears which urge the clutches toward application.

This invention is especially useful for high bias limited slip differentials but is not limited to the high bias type. The bias ratio may be defined as follows:

$$\text{Bias Ratio} = \frac{\text{Static Wheel Torque}}{\text{Slipping Wheel Torque}}$$

The present invention provides for a bias ratio which varies inversely with the torque level applied to the case.

Differentials of the type of the present invention are called "limited slip differentials" because they act to prevent slip by the wheel on the surface which provides the least traction. It will be understood that the axial force exerted by the interaction of the side gear with the pinion gear can be altered by changing the shapes of the gear teeth.

## Claims

1. A limited slip differential (10) having a crossmember (36) disposed within a rotatable case (12) and connected for rotation with the case about an axis of rotation (25), a bevel pinion gear (42) carried by the crossmember, an axle shaft (28) rotatably carried by the case, a side gear (32) disposed within the case having its teeth in mesh with the teeth of the pinion gear (42), the inner end of said axle shaft being connected to the side gear for rotation with the side gear about the axis of rotation, a friction clutch (60) for transmitting torque between the case and the side gear, the clutch including a first annular friction portion (60a) connected to the case and a second annular friction portion (60 b) connected to the side gear, whereby an axial force applied to the side gear by the pinion gear urges the two friction members into engagement and thus restricts the differential action of the differential, characterised in that the limited slip differential comprises, means (69) for exerting another and addivitive force on said friction clutch (60), said means (69) including an annular spring retainer (48) acting on said side gear, an annular flat spring (56) located between said retainer (48) and said crossmember (36) for exerting a force axially outward on said side gear relative to said crossmember; said crossmember (36) having at least one opening (37) therein; said spring retainer including an annular rim (72) which houses said spring: and said retainer having at least one projections (74) extending into said opening (37) which causes said retainer to rotate in unison with said crossmember.

2. A limited slip differential according to claim 1, wherein said first and second annular friction members (60) are interleaved plates.

3. A limited slip differential according to claim 1 or 2, wherein said opening (37) in said crossmember - (36) is parallel to said axis of rotation (25).

4. A limited slip differential according to claim 1, 2 or 3, wherein a spacer (81) is interposed between said retainer (48) and said side gear (32).

Fig.1

# Fig. 2

# Fig. 3

# Fig. 4

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | DE-A-2 358 794 (DAIMLER-BENZ) * page 17, line 21 - page 19, line 1; figure 1 * | 1-3 | F 16 H 1/45 |
| A | DE-B-1 209 004 (RENAULT) * whole document * | 1-3 | |
| D,A | US-A-3 815 442 (H.A. McANINCH) * column 4, lines 11-38; figures 3, 4 * | 1,2 | |
| A | GB-A-1 155 889 (DAIMLER-BENZ) * whole document * | 1-3 | |
| A | DE-A-3 609 293 (L. SCHMID) * abstract; figures 1, 3 * | 1,3 | |
| A | US-A-3 864 992 (R.H. LOVDAHL) | | |
| A | DE-A-2 706 052 (DAIMLER-BENZ) | | |

TECHNICAL FIELDS SEARCHED (Int. Cl.4)

F 16 H 1/00
B 60 K 17/00

The present search report has been drawn up for all claims

| Place of search | Date of completion of the search | Examiner |
|---|---|---|
| BERLIN | 24-11-1987 | GERTIG I. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)